# EUROPEAN PATENT SPECIFICATION

(11) **EP 4 042 153 B1**
(45) Date of publication and mention of the grant of the patent: **29.01.2025**
(21) Application number: 20786567.6
(22) Date of filing: 07.10.2020
(51) Int. Cl.: G01N 30/86

(54) **FLUID SAMPLE CLASSIFICATION**
KLASSIFIZIERUNG VON FLÜSSIGKEITSPROBEN
CLASSIFICATION D'ÉCHANTILLON DE FLUIDE

(30) Priority: 09.10.2019 GB 201914575
(43) Date of publication of application: 17.08.2022
(73) Proprietor: Cytiva Sweden AB, 751 84 Uppsala (SE)
(72) Inventor: BJERNELD, Erik, 751 84 Uppsala (SE)
(74) Representative: Bedford, Grant Richard
(86) International application number: PCT/EP2020/078119
(87) International publication number: WO 2021/069493

(56) References cited:
- WO-A1-2019/126693
- CN-A- 105 891 364
- CN-A- 107 522 768
- US-A1- 2002 182 604
- US-A1- 2008 234 945
- US-A1- 2018 031 530
- US-A1- 2018 172 630

## Description

### Technical field of the invention

The present invention relates to methods and computer programs for the classification of samples which have been subject to a separation of their constituents, for example either by chromatography or electrophoresis, and more particularly to a method for classifying that sample based on the relative amount and constituent profile similarity to a reference sample.

### Background of the invention

In the manufacturing of biopharmaceuticals such as vaccines, antibodies, recombinant proteins, gene therapy vectors etc. several chromatographic separation steps are usually needed to remove various contaminants and impurities from the product. During each step of the manufacturing process, there is a need to check both amount and purity compared to reference samples.

Also known, for example from US 2018/0031530 Al, is a technique for product quality control in which a comparison between a product and its standard reference is provided.

However, separation profiles often display multiple molecule-peak bands which may overlap. The analysis of such complex separation profiles adds significant cost and process time. Furthermore, separation profiles of complex samples can be difficult to analyse accurately which may introduce individual operator bias. Hence, there is a significant interest in fast automated analysis, both to remove personal bias and to reduce the time of manufacturing biopharmaceuticals. Accordingly, there is a need for methods and computer programs for sample comparisons which can be both fast and automated if needed.

### Summary of the invention

One aspect of the invention is to provide a method as defined by appended claim 1, which may be implemented by a computer program, for comparison of different samples in a biopharmaceutical process. This is achieved with the introduction of a similarity score based on a two-dimensional analysis of the relative amount and constituent profile similarity to a reference sample. The relative amount is a measurement of the magnitude of different chemical constituents of a sample compared to the magnitude of constituents of a reference sample. The constituent profile similarity calculation is a measurement of similarity of a spatial, or temporal, profile of separated constituents generated by a separation process, in comparison to the profile(s) of one or multiple reference sample(s) which have been subject to the same separation process. The resulting two-dimensional data set forms the basis of classification of samples by providing a score of similarity to each sample which allows an estimate of the similarity of the sample of interest with the reference sample(s). The analysis method can be automated and implemented using computer analysis software together with suitable hardware, after the classification criteria has been set.

One advantage is that such analysis method allows for a fast, non-operator dependent, classification scheme, in which limits for grouping samples can be easily set for automated analysis. This method allows for decisions to be made, for example if the manufacturing process is working satisfactory, or if separation parameters need to be changed. Additionally, it is common for separations of sample constituents to be incomplete, in other words measured bands of constituents overlap, leading to data which is difficult to analyse. The proposed method allows for such incomplete separation by comparing a measured profile with a reference in the manner described immediately above, rather than looking at certain peaks of measurements only.

Further suitable embodiments of the invention are described in the dependent claims.

### Drawings

Fig. 1 shows an image of an analysed Coomassie stained gel. Different samples (1-10) were separated on a polyacrylamide gel and subsequently stained with the Coomassie stain. The gel was analysed using the analysis software Image Quant TL (available from Cytiva Life Sciences).
Fig. 2 shows the electrophoretic lane profile of sample 5 in Fig. 1.
Fig. 3 shows the two-dimensional similarity score plot of the samples in Fig. 1 and Fig. 2. The relative amount of sample (y-axis) and the lane profile similarity score (x-axis) are displayed in one plot. In this example, sample number 8 was the reference sample.
Fig. 4 shows one way of grouping the different samples of Fig. 3 into three groups (A-C).
Fig. 5 shows chromatograms for two protein samples.
Fig. 6 shows a 2D similarity scatter plot of 185 chromatograms from different cycles in a protein purification process produced using an embodiment of the present invention.
Fig. 7 shows a Graphical User Interface (GUI) for presenting results produced using an embodiment of the present invention.
Fig. 8 shows a method according to various embodiments of the present invention.

### Definitions

As used herein, the terms "comprises," "comprising," "containing," "having" and the like can have the meaning ascribed to them and can mean "includes," "including," and the like; "consisting essentially of or "consists essentially" likewise has the meaning ascribed in patent law and the term is open-ended, allowing for the presence of more than that which is recited so long as basic or novel characteristics of that which is recited is not changed by the presence of more than that which is recited, but excludes prior art embodiments.

### Detailed description of embodiments

In one aspect, the present invention discloses a computer assisted method for automated analysis of samples which have been subject to a separation, which term includes forming into aliquots, fractions or streams of higher concentration of at least some of the samples' constituents. The term separation includes partial separation.

In certain embodiments, the samples may be intermediates or a final product, in a biopharmaceutical manufacturing process. In addition, reference samples may either be subjected to a chemical separation and subsequent analysis when the process was created, or saved for a chemical separation analysis at a later stage. It is well known in the art of biopharmaceutical manufacturing how store reference samples for future analysis. Saved reference sample data may be used also for comparisons.

In some embodiments, the separation is performed by electrophoresis and the separated molecules are detected using colour stains or fluorescent dyes. Lane profiles of the electrophoretic separations are then compared, both in terms of how much sample constituent there is in the lane, and how similar the lane spatial profiles are, in comparison with a reference sample.

In some embodiments, the separation is performed by chromatography and separated molecules are detected using light absorbance measurements. Separation profiles are then compared, both in terms of how much sample was eluted from the chromatography column and how similar the sample profiles (also called chromatograms) are. In this way the reproducibility of different batches in a bioprocess manufacturing process can quickly assessed and decisions for the continuation of the process can be easily made.

### EXAMPLES

### Example 1

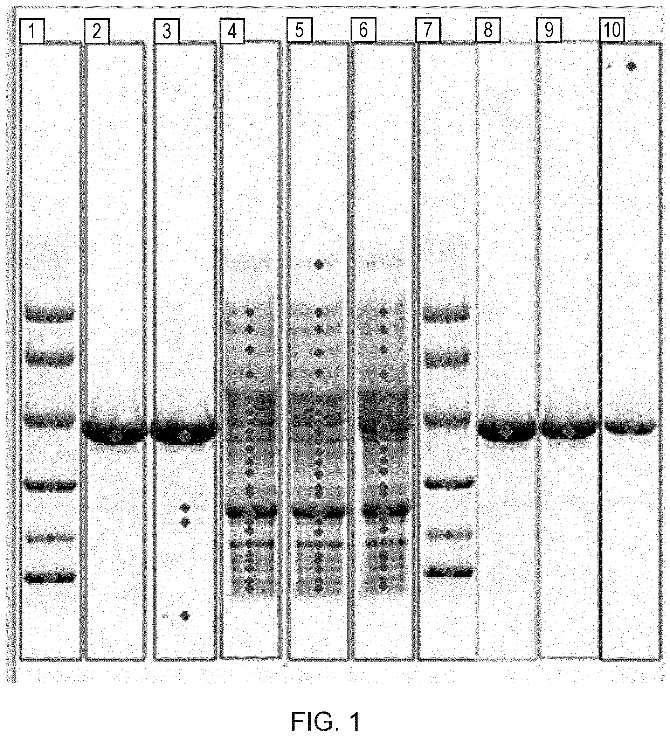

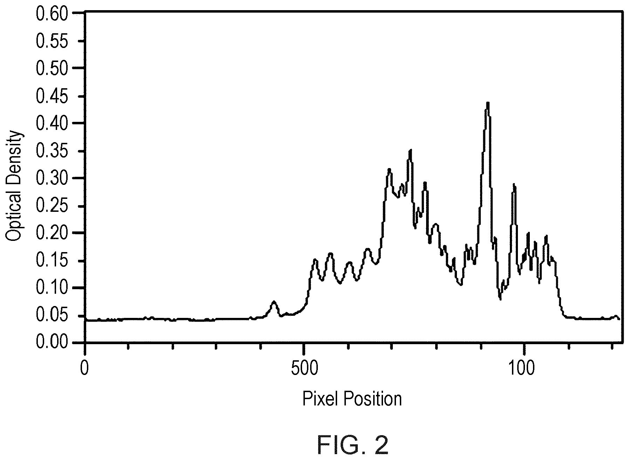

Different protein samples were analysed using SDS-PAGE electrophoresis. The resulting Coomassie stained gel is shown in Fig. 1. Some samples contain multiple proteins and the resulting lane profile after electrophoretic separation is complex, i.e. it exhibits many overlapping peaks. Such lane profiles are difficult to compare manually by eye. The opacity, also termed optical density, of each lane or lanes of interest can be measured in relation to the spatial position along the lane. Such a measurement is given in the graph shown in Fig 2 for lane 5 of Fig 1 only, but the same measurement can be made for the other lanes shown in Fig 1. Using the data generated from the graph of Fig 2 (which need not be graphically represented but could exist purely as data), the lane profiles were analysed both in terms of amount of protein (opacity =optical density in this case) and how the different lane profiles correlate spatially, using the Pearson correlation coefficient. This calculation compares two arrays of data, in this case sample lane profile data of the type graphically illustrated in Fig 2, with a reference sample lane profile-in this case lane 8. The calculated value can range from -1 (negative correlation) to 0 (no correlation) to 1 (positive correlation). The Pearson pair-wise correlation calculation is one way to correlate different lane-profiles using a reference lane profile or a reference average of several lane profiles. However, there are many other ways to correlate lane profiles which may be used.

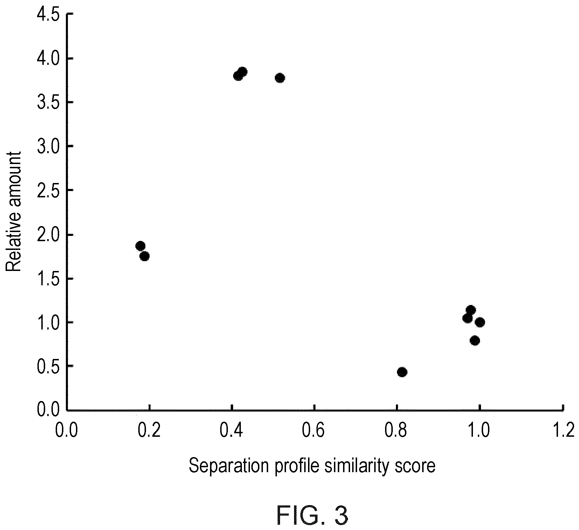

The results of the correlation calculation for each of the ten lanes shown in Fig 1 are displayed in a two-dimensional plot in Fig. 3. Where it becomes apparent that certain lanes correlate well to the reference sample in terms of the amount of a sample constituent separated proteins in this lane give rise to the opacity bands shown in Fig 1 and are given a score close to 1 (y axis), and also the entire lane profile for certain lanes correlate well with the reference lane and are thus given a score close to 1 (x axis). These data provide two similarity comparisons: the amount of chemical constituent (e.g. protein) similarity (y axis); and the actual chemical constituent profile similarity (x axis). It is also apparent that the samples in this example fall into different groups based on the separation profile similarity score.

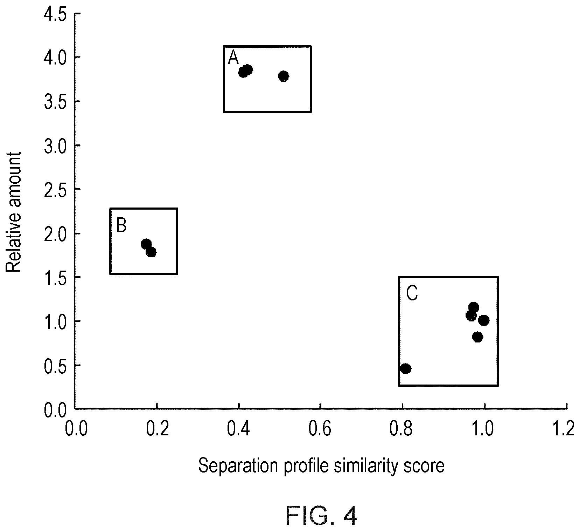

As shown in Fig 4, the data points allow for easy classification by grouping of samples. Such classification allows for fast analysis and is not dependent on the users estimate of how similar different profiles are. Limits for grouping sample can be set based on:
A) The amount of sample similarity only;
B) The chemical separation profile similarity only;
C) The amount of sample and chemical separation profile similarity.

Thus, depending on which samples have been analysed, different rules for grouping samples may be applied. For example, only group C samples in Fig 4 are considered to be classified as falling within an acceptable similarity to the reference sample.

### Example 2

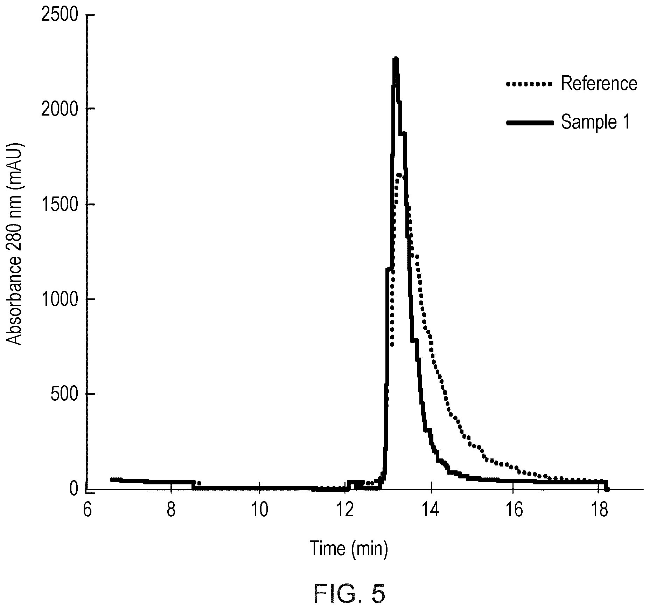

A similar technique as described above can be applied to chromatographic separations as shown in Fig 5, where a photo-absorbance meter has been used to measure bands of chemical constituents, such as proteins, emerging from a column containing a chromatographic media (typical UV absorbance to measure protein concentration). The resultant data (called a chromatogram) is shown in Fig 5 with two chromatograms superimposed and the data set comprises a photodetector output reading, equivalent to the opacity/constituent amount measurements of Fig 2, and temporal (time related) data, equivalent to the spatial/distance data shown also in Fig 2. That data set is processed in the same way as described above, again to provide a comparison score of the constituent amount and chemical similarity with a reference sample or average sample data. That processed data then classifies the sample, for example to pass or fail result in a biopharmaceutical manufacturing process. In Fig 5, the two chromatograms of two protein samples, with the same starting concentration, were compared using an Äkta pure 25 chromatography system (available from Cytiva Life Sciences). The samples differed in type of Strep-Tactin tag used for separation. As a result, the chromatogram (i.e. the time separation profile) showed different peak shapes and subtle changes in separation profile. For this part of the chromatogram, the similarity score analysis resulted in a similarity score of (0,90; 0,87) for sample 1, where 0,90 is the separation profile similarity score and 0,87 is the relative amount, which shows that sample 1 differed both in eluted amount, and also to some degree in the chemical binding to the separation matrix, compared to the reference sample.

Those skilled in the art would be aware that various analyses could be performed in accordance with the present invention. For example, when considering chromatography examples, additional dimensions in the chromatography analysis may be, for example, one or more of: pH, conductivity and/or pressure. Hence, chromatography run data such as time-related data corresponding to pressure, pH and/or conductivity data can be used for the classification of samples. Such parameters may instead of a relative amount, or additionally thereto, be used as y-axis data (ordinate data) for a similarity plot.

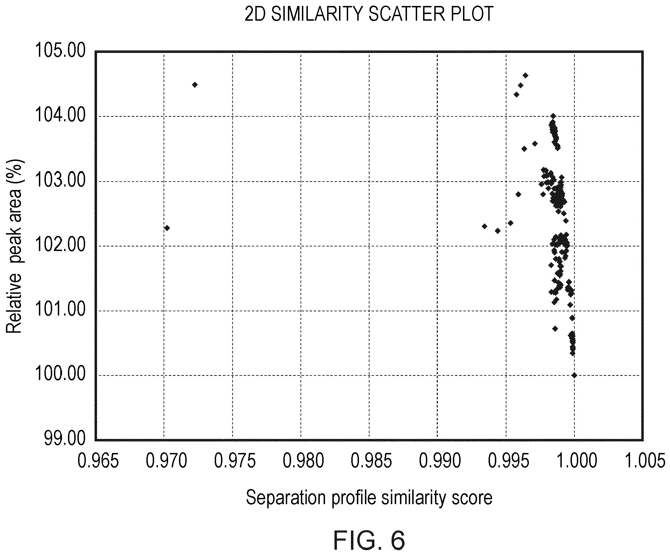

Fig. 6 shows a 2D similarity scatter plot of 185 chromatograms from different cycles in a protein purification process produced using an embodiment of the present invention. The plot shows how chromatogram relative peak area correlates to separation profile similarity score. Such plot data demonstrated that using embodiments of the present invention many runs can be analyzed at high resolution, and can further identify data points that cannot readily be determined, for example, by a skilled operator. Various embodiments of the invention may thus be used to alert an operator to outlier values and/or could be used in automated processing systems to optimise control parameters for a chromatography based bio-processing system.

In Figure 6, data was derived for each of the 185 chromatograms from purification cycles using Fibro HiTrap PrismA^{™} chromatography units in an Äkta Pure 25^{™} system with pH step elution. The reference sample was chosen as the first chromatogram in the series. All chromatograms were apparently very similar but a Pearson correlation coefficient calculation was used to detect two runs which differed in terms of peak shape. These two values appear as outliers to the left of Figure 6. After inspection, all cycle chromatograms were judged to be acceptable. (Note: Some values in these chromatograms were saturated and peak area is therefore not proportional to relative amount for this particular data-set.)

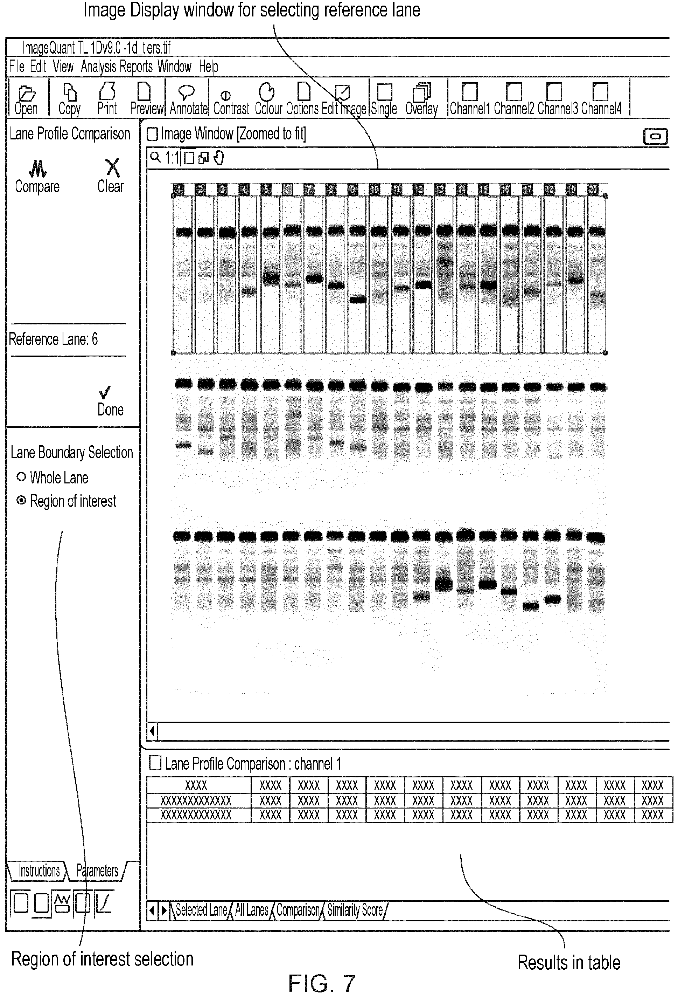

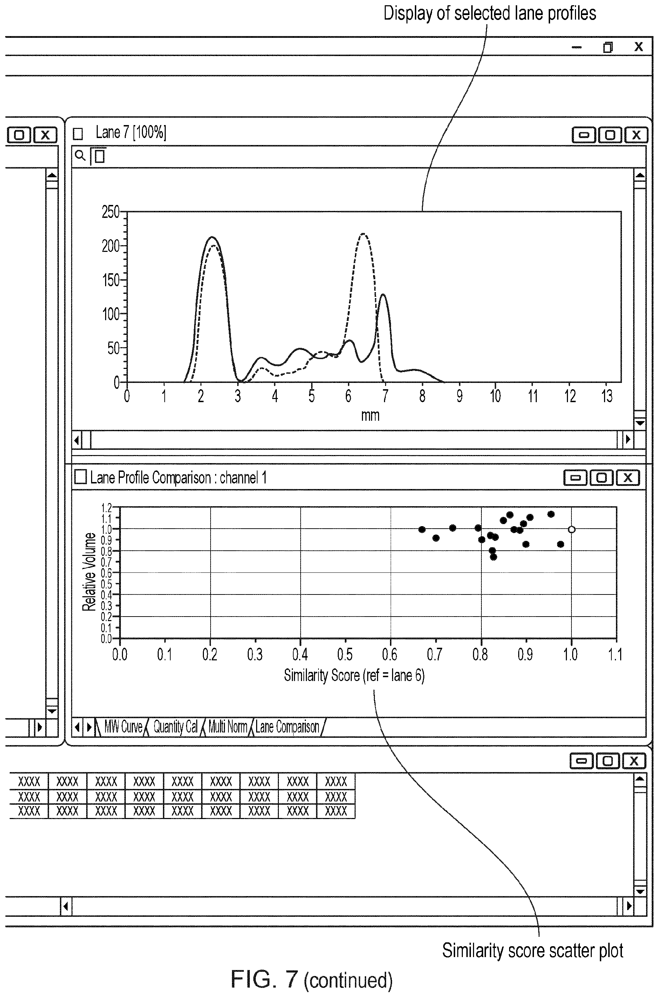

Fig. 7 shows a Graphical User Interface for presenting results produced using an embodiment of the present invention. The GUI includes a window that provides 2D visualization of data. In this example, a similarity score vs. relative volume plot is shown. Such a 2D scatter plot provides for easy user visualization. The GUI may also, or alternatively, enable user selection of reference profiles so as to display profiles, for example electrophoresis lanes or chromatograms, and show the two-dimensional sample data in a scatter plot.

Furthermore, in various embodiments, the 2D scatter plot(s) can enable a user to select a region of interest for analysis, remove all data points from an analysis which have reached the maximum limit of the detector and/or use the scatter plot to set limits for grouping samples into different groups. Moreover, various embodiments may also allow a scatter plot to track a protein purification process, for example, by using trend lines or colour gradients.

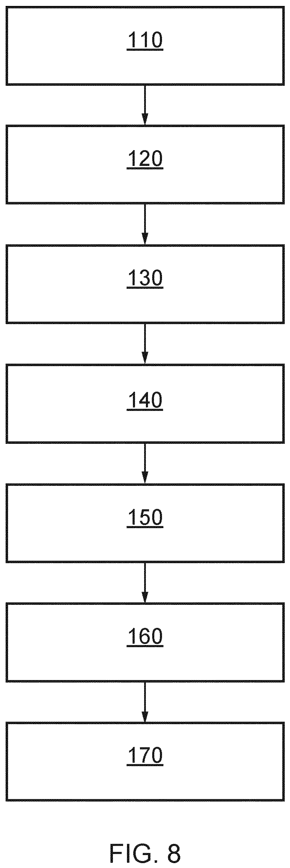

Fig. 8 shows a method according to various embodiments of the present invention. The method 100 comprises the steps of: a. at least partially separating 110 one or more of the chemical constituents of the fluid sample; b. measuring and recording 120 the amount of separated chemical constituents of the sample during, or after, the chemical separation; c. measuring and recording 130 the spatial or time separation profile of sample constituents, during or after separation, and providing a data set of the same; d. comparing 140 the amount of said separated constituents to one or more reference samples; e. comparing 150 the spatial or time separation profile to the corresponding profile of the or each reference sample; f. assigning 160 a similarity score to the sample based on the similarity of the amount or the profile comparisons of the separated constituents, as performed under steps d. 140 and e. 150 above, or both, with the equivalent amount and/or profile of the or each reference sample respectively; g. providing 170 a classification of the sample based on the similarity score.

In various embodiments, relating to electrophoresis, the method 100 may include one or more of the following steps:
1a. Selecting region of interest in an image. For electrophoresis a user may create a lane box, for example, using a GUI of the type referred to above.
2a. Optionally, saturated regions of the lane profiles may then be excluded from analysis, i.e. regions in which the detector has reached its maximum value. This may be automated or could be user driven.
3a. Correcting for uneven migration. A user may adjust a lane box and lanes to correct for uneven migration across an electrophoresis gel. Optionally, the lane profile scales may be corrected by comparing to marker samples, i.e. samples with known molecular weight, in other lanes, either by the user or automatically.

In various embodiments, relating to chromatography, the method 100 may include one or more of the following steps:
1b. Selecting a region of interest in chromatogram either manually or automatically by way of analysis software. This step is optional, alternatively a full chromatogram can be analyzed.
2b. Optionally, saturated regions of the lane profiles are excluded from an analysis, i.e. regions in which the detector has reached its maximum value.
3b. Aligning of chromatograms for comparison is undertaken. Chromatogram alignment can be performed either automatically by a software algorithm automatically or by the user. Alignment is typically based on the performed chromatography operations, for example start of a phase, or time at elution of a known reference sample. This step is optional, and in some cases no alignment is needed.

The following steps may then be applied to both electrophoresis analysis and chromatogram analysis:
4. If data-sets have a different number of data points, individual electrophoresis lane profiles or chromatograms may then either be sampled or interpolated to obtain the same number of data points per sample.
5. Analysis of all data points or user a defined analysis range may then be performed. For example, in some cases there is only one peak of interest, then an analysis range may adjusted accordingly either automatically or by the user.
6. The integrated signal of samples of a lane or chromatogram is calculated. Alternatively, the volume sum of all detected bands, or peaks, are summed for each lane.
7. In a preferred embodiment, all possible pair-wise comparisons of the N samples are made. This results in N X N arrays. For example, one array for relative amounts, and one for profile similarity score. Such may also be used to compare pressure, pH and/or conductivity data-sets for chromatography.
8. A GUI allows user to select one reference lane or chromatogram and a 2D scatter plot may then be generated showing relative amounts on the y-axis and profile similarity score on the x-axis.

Various embodiments and features of the present invention have thus been described. This written description further uses examples to disclose the invention, including the preferred mode, and is provided to enable any person skilled in the art to practice the invention, including making and using any devices or systems and performing any incorporated methods. The scope of the invention is defined by the claims.

## Claims

1. A method (100) for classifying a fluid sample, which method comprises the steps of:
a) at least partially separating (110) one or more of the chemical constituents of the fluid sample;
b) measuring and recording (120) data relating to the separated chemical constituents of the sample during, or after, the chemical separation, including an amount thereof;
c) measuring and recording (130) the spatial or time separation profile of sample constituents, during or after separation, and providing a data set of the same;
d) comparing (140) the amount of said separated constituents to one or more reference samples;
e) comparing (150) the spatial or time separation profile to the corresponding profile of the or each reference sample; **characterised by**:
f) assigning a similarity score (160) to the sample based on the similarity of the amount and the profile comparisons of the separated constituents, as performed under steps d (140) and e (150) above, with the amount and profile of the or each reference sample, respectively; and
g) providing (170) a classification of the sample based on the similarity score.

2. The method (100) according to claim 1, wherein plural samples are classified, wherein step b) includes providing (120) a data set of the amount of the or each separated constituent for each of the samples, wherein step c) includes providing (130) a data set of the spatial separation profile or time separation profile for each sample, and wherein those two data sets are processed by an algorithm to provide a two-dimensional sample data set for each sample which is used in steps d) to g).

3. The method (100) according to claim 2, wherein different groups of samples represent pass or fail results in a quality control of a biopharmaceutical manufacturing process.

4. The method (100) according to claim 2 or 3, wherein the presence, or absence, of samples in different groups lead to changes in a biopharmaceutical manufacturing process.

5. The method (100) according to any preceding claim, wherein the chemical separation is electrophoresis.

6. The method (100) according to any preceding claim, wherein the chemical separation is chromatography.

7. The method (100) according to Claim 6 where chromatography run data, for example time-series of pressure, pH and/or conductivity data, or a combination of these, is used for the classification of samples.

8. The method (100) according to any preceding claim, wherein the spatial or time separation profile similarity score is calculated using the Pearson correlation function.

9. A computer program, comprising program code for performing at least the method (100) steps d), e), f) and g) of claim 1 when the program is run on a computer having means for processing the recorded data obtained by the steps b) and c) of claim 1.

10. The computer program according to claim 9, further comprising program code for controlling a graphical user interface, GUI, for user selection and/or presentation of reference profiles and/or regions of interest for analysis and/or data, and/or electrophoresis lanes and/or chromatograms and/or a two-dimensional scatter plot.

11. The computer program according to claim 10, wherein the program code for controlling the GUI is further configured to enable a user to remove data points from an analysis which have reached a maximum limit of a detector.

12. The computer program according to claim 10 or 11, wherein the program code for controlling the GUI is configured to present a two-dimensional scatter plot which can be used to set limits for grouping samples into different groups and/or track a protein purification process.

13. The computer program according to claim 12, wherein the program code for controlling the GUI is configured to present trend lines and/or colour gradients to aid in tracking a protein purification process.

14. A biopharmaceutical manufacturing plant for checking and/or controlling a biopharmaceutical manufacturing process, the biopharmaceutical manufacturing plant comprising:
a. means for at least partially separating (110) one or more of the chemical constituents of the fluid sample;
b. means for measuring and recording (120) data relating to the separated chemical constituents of the sample during, or after, the chemical separation, such as an amount thereof;
c. means for measuring and recording (130) the spatial or time separation profile of sample constituents, during or after separation, and providing a data set of the same;
d. means for comparing (140) the amount of said separated constituents to one or more reference samples;
e. means for comparing (150) the spatial or time separation profile to the corresponding profile of the or each reference sample; further **characterised by**:
f. means for assigning a similarity score (160) to the sample based on the similarity of the amount and the profile comparisons of the separated constituents, as performed under steps d (140) and e (150) above; and
g. means for providing (170) a classification of the sample based on the similarity score.

## Patentansprüche

1. Verfahren (100) zum Klassifizieren einer Flüssigkeitsprobe, wobei das Verfahren die folgenden Schritte umfasst:
a) zumindest teilweises Abtrennen (110) eines oder mehrerer der chemischen Bestandteile der Flüssigkeitsprobe;
b) Messen und Aufzeichnen (120) von Daten in Bezug auf die abgetrennten chemischen Bestandteile der Probe während oder nach der chemischen Abtrennung, einschließlich einer Menge dieser;
c) Messen und Aufzeichnen (130) des räumlichen oder zeitlichen Abtrennungsprofils von Probenbestandteilen während oder nach der Abtrennung, und Bereitstellen eines Datensatzes derselben;
d) Vergleichen (140) der Menge der abgetrennten Bestandteile mit einer oder mehreren Referenzproben;
e) Vergleichen (150) des räumlichen oder zeitlichen Abtrennungsprofils mit dem entsprechenden Profil der oder jeder Referenzprobe; **gekennzeichnet durch**:
f) Zuweisen eines Ähnlichkeitswerts (160) zu der Probe auf der Grundlage der Ähnlichkeit der Mengen- und Profilvergleiche der abgetrennten Bestandteile, wie sie in den obigen Schritten d (140) und e (150) durchgeführt wurden, mit der Menge bzw. dem Profil der oder jeder Referenzprobe; und
g) Bereitstellen (170) einer Klassifizierung der Probe auf der Grundlage des Ähnlichkeitswerts.

2. Verfahren (100) nach Anspruch 1, wobei mehrere Proben klassifiziert werden, wobei Schritt b) das Bereitstellen (120) eines Datensatzes über die Menge des oder jedes abgetrennten Bestandteils für jede der Proben einschließt, wobei Schritt c) das Bereitstellen (130) eines Datensatzes des räumlichen Abtrennungsprofils oder des zeitlichen Abtrennungsprofils für jede Probe einschließt, und wobei diese beiden Datensätze durch einen Algorithmus verarbeitet werden, um einen zweidimensionalen Probendatensatz für jede Probe bereitzustellen, der in den Schritten d) bis g) verwendet wird.

3. Verfahren (100) nach Anspruch 2, wobei verschiedene Gruppen von Proben bei der Qualitätskontrolle eines biopharmazeutischen Herstellungsprozesses ein bestandenes oder ein nicht bestandenes Ergebnis darstellen.

4. Verfahren (100) nach Anspruch 2 oder 3, wobei das Vorhandensein oder Fehlen von Proben in verschiedenen Gruppen zu Veränderungen in einem biopharmazeutischen Herstellungsprozess führen.

5. Verfahren (100) nach einem vorstehenden Anspruch, wobei die chemische Abtrennung Elektrophorese ist.

6. Verfahren (100) nach einem vorstehenden Anspruch, wobei die chemische Abtrennung Chromatographie ist.

7. Verfahren (100) nach Anspruch 6, bei dem Chromatographie-Laufdaten, z. B. Zeitreihen von Druck-, pH- und/oder Leitfähigkeitsdaten oder eine Kombination davon, zur Klassifizierung von Proben verwendet werden.

8. Verfahren (100) nach einem vorstehenden Anspruch, wobei der Ähnlichkeitswert des räumlichen oder zeitlichen Abtrennungsprofils unter Verwendung der Pearson-Korrelationsfunktion berechnet wird.

9. Computerprogramm, das einen Programmcode zur Durchführung mindestens der Schritte d), e), f) und g) des Verfahrens (100) von Anspruch 1 umfasst, wenn das Programm auf einem Computer ausgeführt wird, der Mittel zur Verarbeitung der aufgezeichneten Daten aufweist, die durch die Schritte b) und c) von Anspruch 1 erhalten wurden.

10. Computerprogramm nach Anspruch 9, weiter umfassend einen Programmcode zur Steuerung einer grafischen Benutzeroberfläche, GUI, für die Auswahl des Benutzers und/oder die Darstellung von Referenzprofilen und/oder interessierenden Bereichen für die Analyse und/oder Daten und/oder Elektrophorese-Spuren und/oder Chromatogrammen und/oder einem zweidimensionalen Streudiagramm.

11. Computerprogramm nach Anspruch 10, wobei der Programmcode zur Steuerung der GUI weiter so konfiguriert ist, dass er es einem Benutzer ermöglicht, Datenpunkte aus einer Analyse zu entfernen, die einen maximalen Grenzwert eines Detektors erreicht haben.

12. Computerprogramm nach Anspruch 10 oder 11, wobei der Programmcode zur Steuerung der GUI so konfiguriert ist, dass er ein zweidimensionales Streudiagramm darstellt, das verwendet werden kann, um Grenzwerte für die Gruppierung von Proben in verschiedene Gruppen festzulegen und/oder einen Proteinreinigungsprozess zu verfolgen.

13. Computerprogramm nach Anspruch 12, wobei der Programmcode zur Steuerung der GUI so konfiguriert ist, dass er Trendlinien und/oder Farbgradienten darstellt, um die Verfolgung eines Proteinreinigungsprozesses zu unterstützen.

14. Biopharmazeutische Herstellungsanlage zur Überprüfung und/oder Steuerung eines biopharmazeutischen Herstellungsprozesses, wobei die biopharmazeutische Herstellungsanlage Folgendes umfasst:
a. Mittel zur zumindest teilweisen Abtrennung (110) eines oder mehrerer der chemischen Bestandteile der Flüssigkeitsprobe;
b. Mittel zum Messen und Aufzeichnen (120) von Daten, die sich auf die abgetrennten chemischen Bestandteile der Probe während oder nach der chemischen Abtrennung beziehen, wie z.B. eine Menge dieser;
c. Mittel zum Messen und Aufzeichnen (130) des räumlichen oder zeitlichen Abtrennungsprofils von Probenbestandteilen während oder nach der Abtrennung und zum Bereitstellen eines Datensatzes derselben;
d. Mittel zum Vergleichen (140) der Menge der abgetrennten Bestandteile mit einer oder mehreren Referenzproben;
e. Mittel zum Vergleichen (150) des räumlichen oder zeitlichen Abtrennungsprofils mit dem entsprechenden Profil der oder jeder Referenzprobe; weiter **gekennzeichnet durch**:
f. Mittel zum Zuweisen eines Ähnlichkeitswerts (160) zu der Probe auf der Grundlage der Ähnlichkeit der Mengen- und Profilvergleiche der abgetrennten Bestandteile, wie in den obigen Schritten d (140) und e (150) durchgeführt; und
g. Mittel zum Bereitstellen (170) einer Klassifizierung der Probe auf der Grundlage des Ähnlichkeitswerts.

## Revendications

1. Procédé (100) de classification d'un échantillon de fluide, lequel procédé comprend les étapes :
a) de séparation au moins partielle (110) d'un ou plusieurs des constituants chimiques de l'échantillon de fluide ;
b) de mesure et d'enregistrement (120) de données se rapportant aux constituants chimiques séparés de l'échantillon pendant, ou après, la séparation chimique, incluant une quantité de ceux-ci ;
c) de mesure et d'enregistrement (130) du profil de séparation spatiale ou temporelle des constituants d'échantillons, pendant ou après la séparation, et de fourniture d'un ensemble de données s'y rapportant ;
d) de comparaison (140) de la quantité desdits constituants séparés avec un ou plusieurs échantillons de référence ;
e) de comparaison (150) du profil de séparation spatiale ou temporelle avec le profil correspondant du ou de chaque échantillon de référence ; **caractérisé par** :
f) l'attribution d'un score (160) de similarité à l'échantillon sur la base de la similarité des comparaisons de quantité et de profil des constituants séparés, telles que mises en œuvre aux étapes d (140) et e (150) ci-dessus, avec la quantité et le profil du ou de chaque échantillon de référence, respectivement ; et
g) de fourniture (170) d'une classification de l'échantillon sur la base du score de similarité.

2. Procédé (100) selon la revendication 1, dans lequel plusieurs échantillons sont classifiés, dans lequel l'étape b) inclut la fourniture (120) d'un ensemble de données de la quantité du ou de chaque constituant séparé pour chacun des échantillons, dans lequel l'étape c) inclut la fourniture (130) d'un ensemble de données du profil de séparation spatiale ou du profil de séparation temporelle pour chaque échantillon, et dans lequel ces deux ensembles de données sont traités par un algorithme pour obtenir un ensemble de données d'échantillons bidimensionnelles pour chaque échantillon qui est utilisé aux étapes d) à g).

3. Procédé (100) selon la revendication 2, dans lequel différents groupes d'échantillons représentent des résultats conformes ou non conformes dans le cadre d'un contrôle de qualité d'un processus de production biopharmaceutique.

4. Procédé (100) selon la revendication 2 ou la revendication 3, dans lequel la présence, ou l'absence, d'échantillons dans différents groupes mène à des changements dans un processus de production biopharmaceutique.

5. Procédé (100) selon une quelconque revendication précédente, dans lequel la séparation chimique est une électrophorèse.

6. Procédé (100) selon une quelconque revendication précédente dans lequel la séparation chimique est une chromatographie.

7. Procédé (100) selon la revendication 6 où des données d'exécution de chromatographie, par exemple une chronologie de données de pression, de pH et/ou de conductivité, ou une combinaison de celles-ci, sont utilisées pour la classification d'échantillons.

8. Procédé (100) selon une quelconque revendication précédente, dans lequel le score de similarité de profil de séparation spatiale ou temporelle est calculé en utilisant une fonction de corrélation de Pearson.

9. Programme informatique, comprenant un code de programme pour mettre en œuvre au moins les étapes d), e), f) et g) du procédé (100) de la revendication 1 lorsque le programme est exécuté sur un ordinateur présentant des moyens de traitement des données enregistrées obtenues par les étapes b) et c) de la revendication 1.

10. Programme informatique selon la revendication 9, comprenant en outre un code de programme pour commander une interface utilisateur graphique, GUI, en vue d'une sélection par l'utilisateur et/ou d'une présentation à l'utilisateur de profils de référence et/ou de régions d'intérêt pour une analyse et/ou des données, et/ou des pistes d'électrophorèse et/ou des chromatogrammes et/ou un diagramme de dispersion bidimensionnel.

11. Programme informatique selon la revendication 10, dans lequel le code de programme pour commander la GUI est en outre configuré pour permettre à un utilisateur de supprimer des points de données d'une analyse qui ont atteint une limite maximale d'un détecteur.

12. Programme informatique selon la revendication 10 ou la revendication 11, dans lequel le code de programme pour commander la GUI est configuré pour présenter un diagramme de dispersion bidimensionnel qui peut être utilisé pour définir des limites pour regrouper des échantillons en différents groupes et/ou suivre un processus de purification de protéines.

13. Programme informatique selon la revendication 12, dans lequel le code de programme pour commander la GUI est configuré pour présenter des lignes de tendance et/ou des gradients de couleur pour aider au suivi d'un processus de purification de protéines.

14. Site de production biopharmaceutique pour vérifier et/ou commander un processus de production biopharmaceutique, le site de production biopharmaceutique comprenant :
a. des moyens pour séparer au moins partiellement (110) un ou plusieurs des constituants chimiques de l'échantillon de fluide ;
b. des moyens pour mesurer et enregistrer (120) des données se rapportant aux constituants chimiques séparés de l'échantillon pendant, ou après, la séparation chimique, telles qu'une quantité de ceux-ci ;
c. des moyens pour mesurer et enregistrer (130) le profil de séparation spatiale ou temporelle des constituants d'échantillons, pendant ou après la séparation, et pour fournir un ensemble de données s'y rapportant ;
d. des moyens pour comparer (140) la quantité desdits constituants séparés avec un ou plusieurs échantillons de référence ;
e. des moyens pour comparer (150) le profil de séparation spatiale ou temporelle avec le profil correspondant du ou de chaque échantillon de référence ; étant en outre **caractérisé par** :
f. des moyens pour attribuer un score (160) de similarité à l'échantillon sur la base de la similarité des comparaisons de quantité et de profil des constituants séparés, telles que mises en œuvre aux étapes d (140) et e (150) ci-dessus ; et
g. des moyens pour fournir (170) une classification de l'échantillon sur la base du score de similarité.
